# EUROPEAN PATENT APPLICATION

(11) **EP 1 087 349 A2**
(43) Date of publication of application: **28.03.2001**
(21) Application number: 00117530.6
(22) Date of filing: 14.08.2000
(51) Int. Cl.: G07F 19/00

(54) **Electronic transaction method, electronic transaction center, electronic transaction terminal and electronic transaction system**

(30) Priority: 27.09.1999 JP 27166099
(71) Applicant: The Industrial Bank of Japan, Limited, Tokyo 100-8210 (JP)
(72) Inventor: Iwasaki, Yutaka, The Industrial Bank of Japan, Ltd, Tokyo 100-8210 (JP)
(74) Representative: Tiedtke, Harro, Dipl.-Ing.

(57) **Abstract**

The purpose of the invention is to realize an electronic transaction method and electronic transaction system which enable automatic re-association by transferring the re-association key. The electronic transaction center or the electronic transaction terminal of this invention contains a means to receive a billing data which contains re-association key information issued by the creditor, a means to generate a remittance request data containing said re-association key information, a checking means for the debtor to check the billing data and the remittance request data, and a means to transmit the remittance request data containing the re-association key information to the addressing bank where the debtor has the account. By this invention, the re-association key information that is attached to the billing information issued by the creditor is automatically transmitted to the receipt notice, so that the re-association procedure can be automatically carried out.

## Description

### BACKGROUND OF THE INVENTION

This invention is related to an electronic transaction method, an electronic transaction center, an electronic transaction terminal and an electronic transaction system, especially related to an electronic transaction method, an electronic transaction center, an electronic transaction terminal and an electronic transaction system which enable the automatic re-association process.

### DESCRIPTION OF THE PRIOR ART

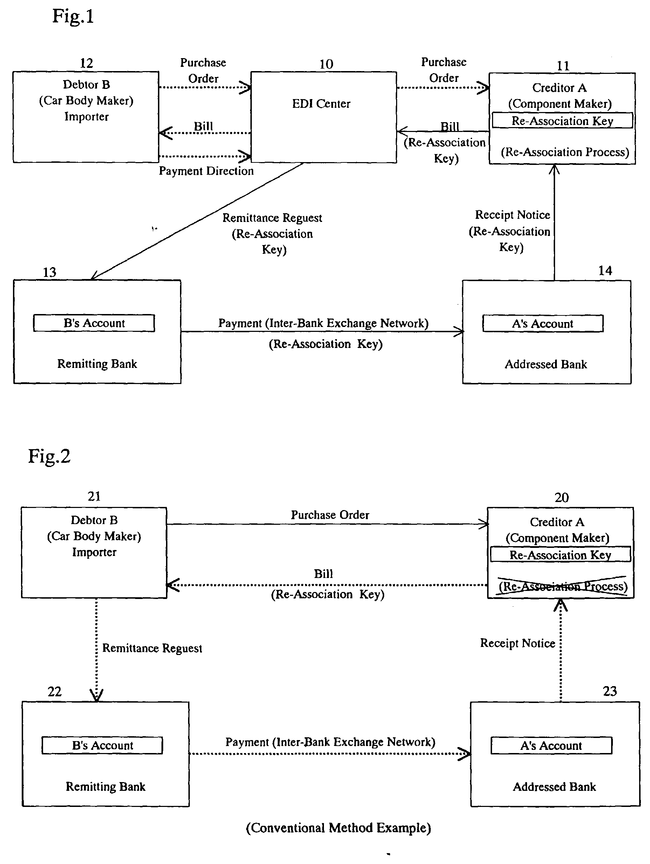

Figure 2 is an explanatory drawing for a conventional settlement method between a creditor and a debtor. In a conventional transaction where an automobile body maker 21 orders some components to an automobile component maker 20, for example, the component maker 20 as the creditor forwards components with its bill to the debtor. The automobile body maker 21, as the debtor, confirms items on the bill such as the claimed amount, and then requests its bank 22 the remittance of its payment to the bank account of the components maker, through a well-known firm banking system (a conventional on-line transaction system between banks and corporations).

The remitting bank 22 remits the money according to the request, by using a conventional on-line inter-bank network such as All Banks Exchange Network in Japan. The forwarded bank 23 then notifies the component maker 20 the receipt of the money, by using a conventional on-line firm banking system, for example. At the notice from its bank, the component maker 20 executes re-association process where it collates the received money amount with the corresponding bill (amount of the account receivable) to check whether the correct amount for the claim is paid or not.

Here, the "account receivable" means the uncollected money to be paid by a customer to a company as the result of a normal transaction between the company and the customer during commercial operations of the company. Examples may be money to be received for its main products or commodities of the company, or charge to be paid for some processing or labor by the company. The "Re-association Process" means a process in which the remitted money amount from the debtor for the un-collected money to be received is collated to the corresponding account receivable amount. When it is confirmed that the both amounts coincide, it means that the confirmation is completed that the corresponding debt has been liquidated.

### SUMMARY OF THE INVENTION

In such a conventional transaction system as is explained above, the request of remittance to the remitting bank 22 by the debtor 21 or the receipt notice to the creditor 20 from the remitted bank 23 can be done automatically and electronically, by a conventional on-line firm banking system, for example. The data format of such information is standardized as the Inter-Bank Common Data Format in the above example. The payment between banks can be done also automatically and electronically, by using a conventional on-line firm banking system such as already mentioned Inter-Bank Exchange Network in Japan, for example. Accordingly, any information entered into the prescribed position of the data format is automatically transferred to the receipt notice to the creditor, and this information can be acknowledged by the creditor.

On the contrary, however, the bill for the transaction is usually sent to the debtor as a paper document. For this reason, even a re-association key which is the information inherent to that bill necessary for the later re-association process is attached to the bill, this information cannot be transferred to the creditor with the receipt notice automatically, unless the debtor enters that key into a prescribed position of the remittance request data. It means that the receipt notice is not always accompanied with the re-association key even if the key is originally attached to the bill, since the re-association key is a kind of optional information for the payment procedure itself.

Accordingly, manual collation and re-association by checking corresponding remitter's name and remitting amount through sight are necessary for a receipt notice without a re-association key. This situation requires unnecessary manual works and may even falls to a re-association for a wrong account receivable. Also, there might be an input miss at the data entry when an operator of the debtor enters the re-association key from a data terminal.

The purpose of this invention is to solve such problems of conventional transaction systems as are mentioned above, and to provide with an electronic transaction method, an electronic transaction center, an electronic transaction terminal and an electronic transaction system which enable the automatic re-association process by transferring the re-association key automatically and reliably. This invention is summarized as the following.

The transaction method of this invention is characterized as; it contains (1) a procedure to issue a billing data containing re-association key information, to generate an account receivable data which contains said re-association key information and to store said account receivable data, (2) a procedure to generate a remittance request data which contains said re-association key information corresponding to said billing data (or matching key information by which said re-association key can be specified) and to transmit said remittance request data that contains said re-association key information corresponding to said billing data (or the re-association key that is specified by the matching key information) to the addressing bank in which the debtor has an account, and (3) a procedure to re-associate the transaction by collating said re-association key information contained in the receipt notice for the remittance from the addressed bank made by said remittance request data (or the re-association key information that is specified by the matching key information) with said re-association key information contained in said account receivable data.

The transaction method of this invention is also characterized in a different way for an electronic transaction center and for an electronic transaction terminal as; it contains (1) a receiving means to receive a billing data which contains re-association key information and which is issued by a creditor, (2) a generating means to generate a remittance request data which contains said re-association key information (or matching key information by which said re-association key information can be specified), (3) a checking means for the debtor to check said billing data and said remittance request data, and (4) a transmitting means to transmit said remittance request data that contains said re-association key information (or matching key information by which said re-association key information can be specified) to the addressing bank in which the debtor has an account.

By this invention, the re-association key information (or the matching key information by which the re-association key information can be specified) that is attached to the billing information issued by the creditor is automatically transmitted to the receipt notice, so that the re-association procedure can be automatically carried out.

### DESCRIPTION OF DRAWINGS

**Figure 1** is the block diagram to show the first embodiment of the electronic transaction method of this invention. **Figure 2** explains a conventional settlement method between a creditor and a debtor. **Figure 3** is to explain relationship between processes and data flows in the EDI center for the electronic transaction system of this invention. **Figure 4** depicts the relationship between processes and data flows in processor 11 at the debtor side in the electronic transaction system of this invention. **Figure 5** shows a data conversion example at EDI center 10 of the electronic transaction system of this invention. **Figure 6** is a flow chart to show the process flow in EDI center 10. **Figure 7** is the flow chart to show the process flow for bill generation process 40 in processor 11 at the creditor side. **Figure 8** shows the flow chart to explain the process flow for re-association process 45 in processor 11 at the creditor side. **Figure 9** is the block diagram to show the second embodiment of the electronic transaction method of this invention. **Figure 10** depicts the relationship between processes and data flows in processor 50 at the debtor side in the electronic transaction system of this invention. **Figure 11** is the block diagram to show the third embodiment of the electronic transaction method of this invention.

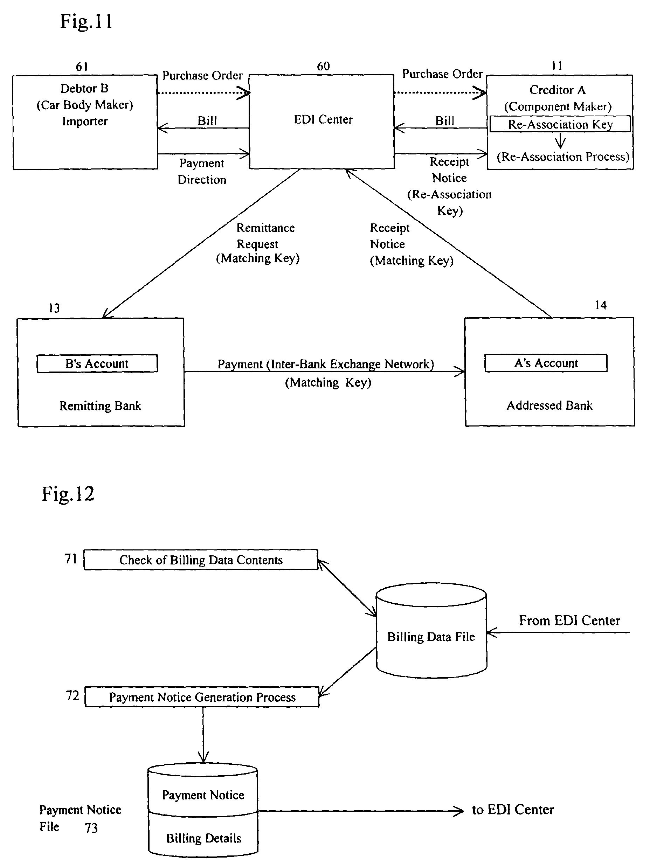

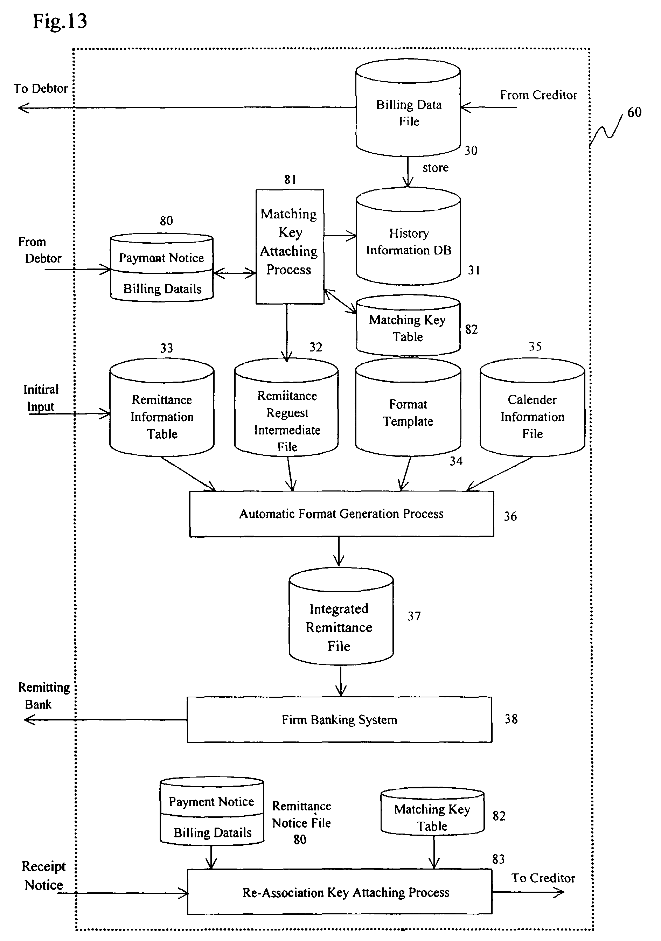

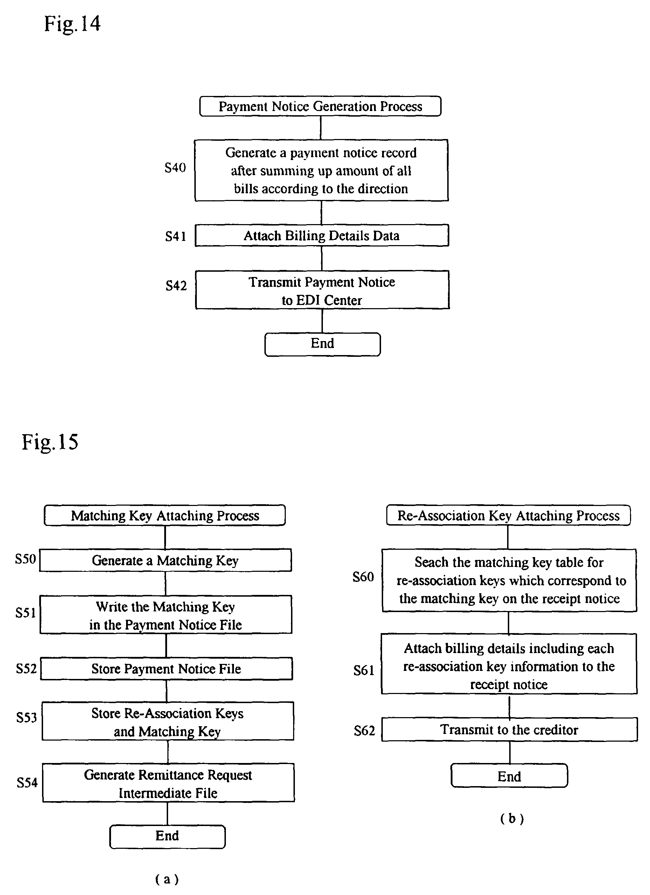

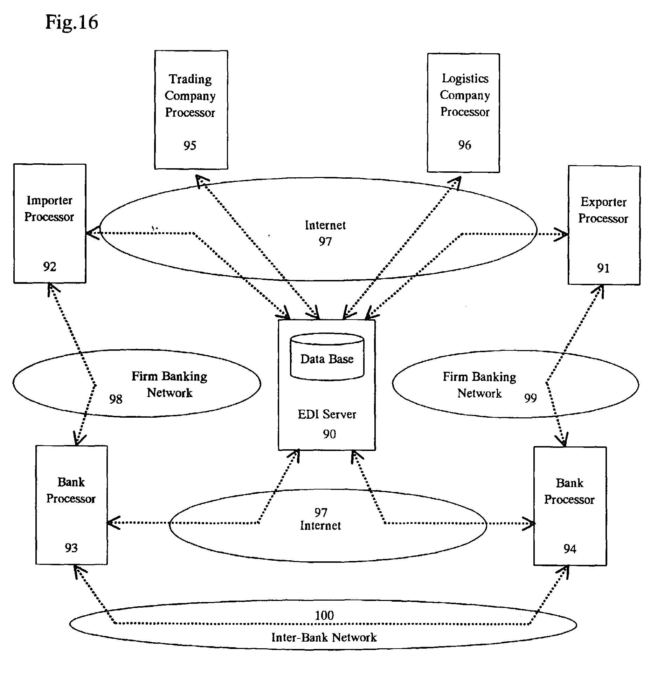

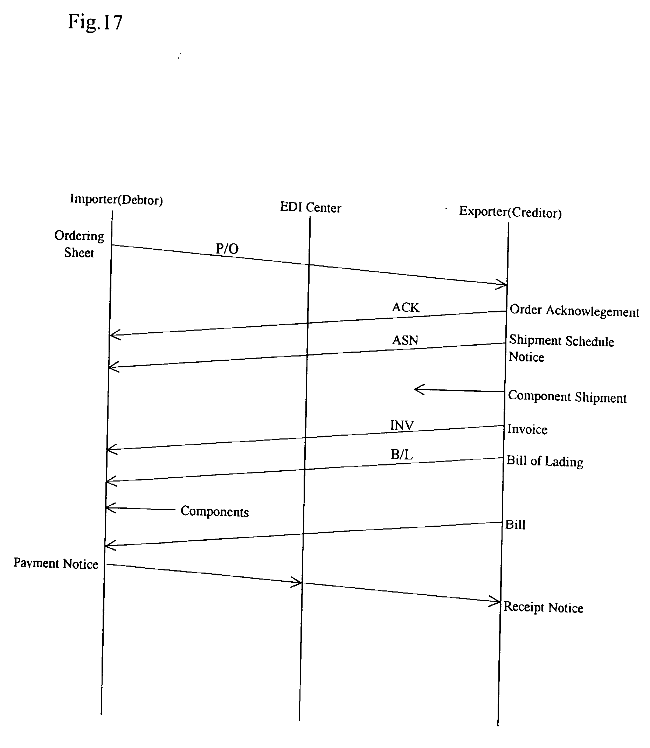

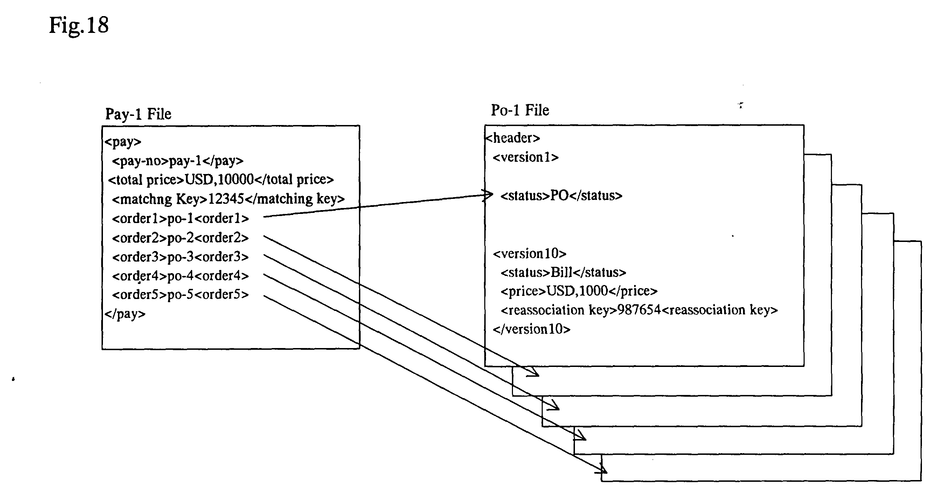

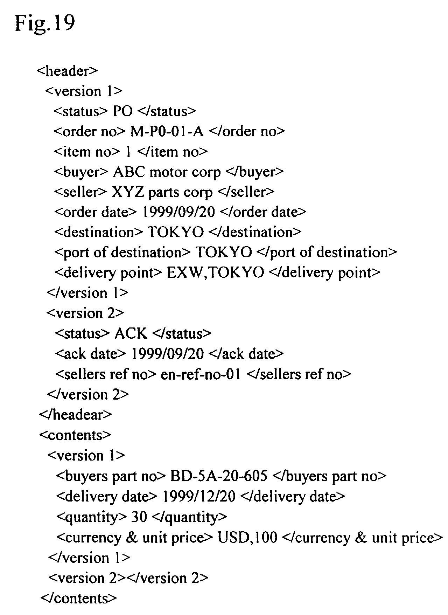

**Figure 12** shows the relationship between processes and data flows in processor 61 at the debtor side in the third embodiment of this invention. **Figure 13** is to explain relationship between processes and data flows in EDI center 60 in the third embodiment of this invention. **Figure 14** is the flow chart to show the detailed contents of process 72 for generating a payment notice in processor 61 at the debtor side. **Figure 15** is to show flow charts for matching key attaching process 81 and re-association key attaching process 83 at EDI center 60. **Figure 16** is the block diagram to show the hardware configuration of the electronic transaction system of this invention. **Figure 17** shows the outline of transaction data exchange sequence in the electronic transaction system of this invention. **Figure 18** shows an example for the content of the payment notice in the third embodiment of this invention. **Figure 19** is an example for the content of transaction data to be transmitted or stored.

### DESCRIPTION OF THE PREFERRED EMBODIMENT

The embodiment of this invention is explained in detail in the following by using drawings. Figure 16 is the block diagram to show the hardware configuration of the electronic transaction system of this invention. EDI server 90 which works as an EDI center is structured so that it can be connected to exporter(creditor) processor 91, importer(debtor) processor 92, trading company processor 95 and logistics company processor 96 through Internet 97. Exporter processor 91, EDI server 90 and bank processor 94 of the exporter's bank are connected each other through firm banking network 98 which is a commonly known data network. Likewise, Importer processor 92, EDI server 90 and bank processor 93 of the importer's bank are connected each other through another firm banking network 98. Also, bank processors 93 and 94 are connected each other through inter-bank data network 100 commonly known as Inter-Bank Exchange Network in Japan.

It is not always necessary to use the Internet, 97, to connect EDI server 90 and bank processors 93 and 94 in the embodiment of this invention. Also, it is possible to use the Internet, 97, instead of using firm banking networks 98, 99 or inter-bank network 100. Additionally, it is also possible to use a leased line network, a public telephone network or a data communication network instead of the Internet, for the purpose of communications between each equipment. An ordinary server which is available in the market can be used as the hardware of EDI server 90. OS and other software for the EDI server 90 can be composed using commercially available server software such as Windows NT ^{Trade Mark}. Well-known protocols such as All Bank Protocol, TCP/IP, HTTP and FTP can be applied according to the communications network used in this invention, in order to realize communications systems of the invention. Exporter processor 91, Importer processor 92, bank processors 93, 94, trade company processor 95 and logistics company processor 96 can be realized also by using commercially available servers, personal computers or any other conventional computers.

Figure 17 shows the outline of transaction data exchange sequence in the electronic transaction system of this invention. When the importer sends a purchase order (P/O) to the EDI center through the Internet, for example, the EDI center stores the P/O data and sends it also to the exporter as the addressee. The exporter sends back the acknowledgement (ACK) to the EDI center after receiving the P/O. The EDI center, after receiving the ACK data, adds it to the corresponding P/O data and stores in a file, and transfer it also to the importer.

The exporter issues a bill after exchanging such documentary data. The importer asks its bank or the EDI center to issue a payment notice through the method that will be explained later. After receiving the receipt notice from its bank, the exporter executes the re-association of the receipt and the corresponding bill or the account receivable.

Figure 19 is an example for the content of transaction data to be transmitted or stored. Transaction data are expressed as text data, for example, as shown in the figure. Those data are structured so that all data histories can be stored and managed in one record, by using tags similar to ones commonly used in **XML**. The tag is a specified character string (<status>, for example) between two specified symbols (called as delimiters, and actually is "<" and ">" here in this embodiment example), where these symbols are not allowed to use elswhere in the character string. A character string between two corresponding tags ("PO", for example) is the data content.

The transaction data format is divided into two portions, a header and contents. The header and contents include one or several versions, respectively. A number starting from 1 is attached to each version, and the number corresponds to the stage of transaction. For example, version 1 is for a P/O and version2 is for P/O acknowledgement. As the transaction enters into a new stage, the number is incremented.

Each version includes items, and all item contents of a version having a lower number are succeeded by the contents of the version having a higher number. If a succeeding version contains the same item as the preceding version, the contents of the item in the preceding version are replaced by the contents of the item in the succeeding version. When the contents of an item need to be deleted, insert "delete" to the item. Since all transaction data are transmitted or stored using the structure explained above, transaction histories can be managed through one record of data. It means that effective transaction data management with portability becomes possible, resulting in easier documentary data generation and management.

Figure 1 is the block diagram to show the first embodiment of the electronic transaction method of this invention. In this embodiment, the settlement procedure when automobile body maker 11 orders components to component maker 12 is explained as an example.

Component maker 11 as the creditor, forwards components according to a received purchase order, and issues a bill. Details of this procedure will be explained later. The billing data is generated as XML text format data as explained above, and a re-association key peculiar to that bill is attached to the data. The billing data is sent to EDI (Electronic Data Interchange) center 10.

EDI center 10 stores the received billing data into a file, and at the same time it requests car body maker 12 as the debtor, through an E-mail or the like, to check the bill. Car body maker 12 checks the billing data, and sends back an acknowledgement if the contents are correct. EDI center then generates remittance request data in accordance with the billing data. The details of this procedure will be also shown later. The re-association key is included in this remittance request data. Car body maker 12 checks the contents of the remittance request data, and returns its directions for payment if it agrees to the request. The generated remittance request data is then sent to remitting bank 13 which is the car body maker's bank, through the conventional firm banking system.

Remitting bank 13 executes the payment in accordance with the received remittance request data, by using conventional Inter-Bank Exchange Network. The re-association key is also attached to the payment data. Addressed bank 14 which is the car body component maker's bank, transmits a receipt, notice data to component maker 11 when it receives the payment data, by using the conventional firm banking system. The re-association key is also attached to the receipt notice data.

At component maker 11, the account receivable data of which the re-association key coincides with the re-association key of the receipt notice data is read out from all account receivable data with re-association keys which were generated and stored at the time of billing data issuance. The automatic re-association can be realized by using the configuration and operations explained above.

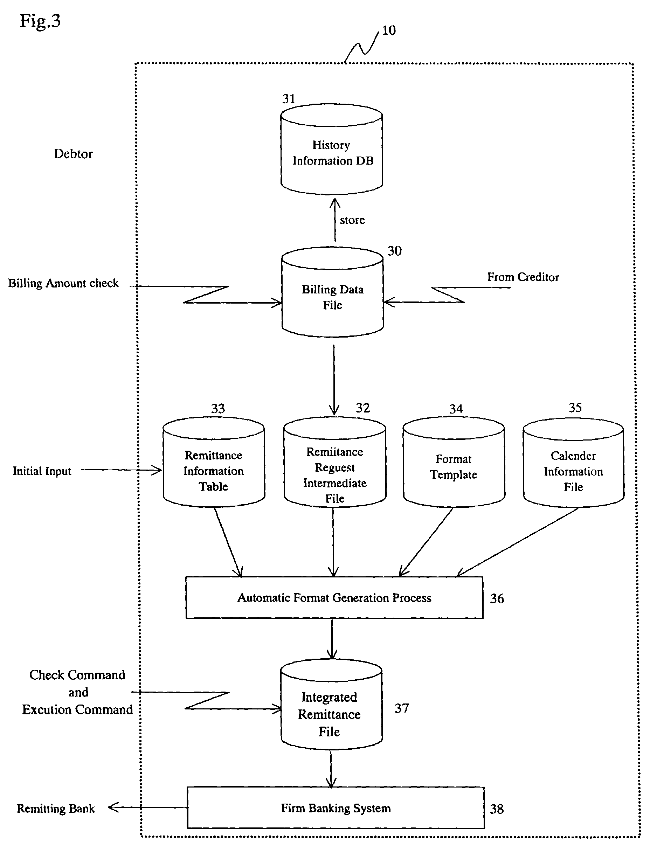

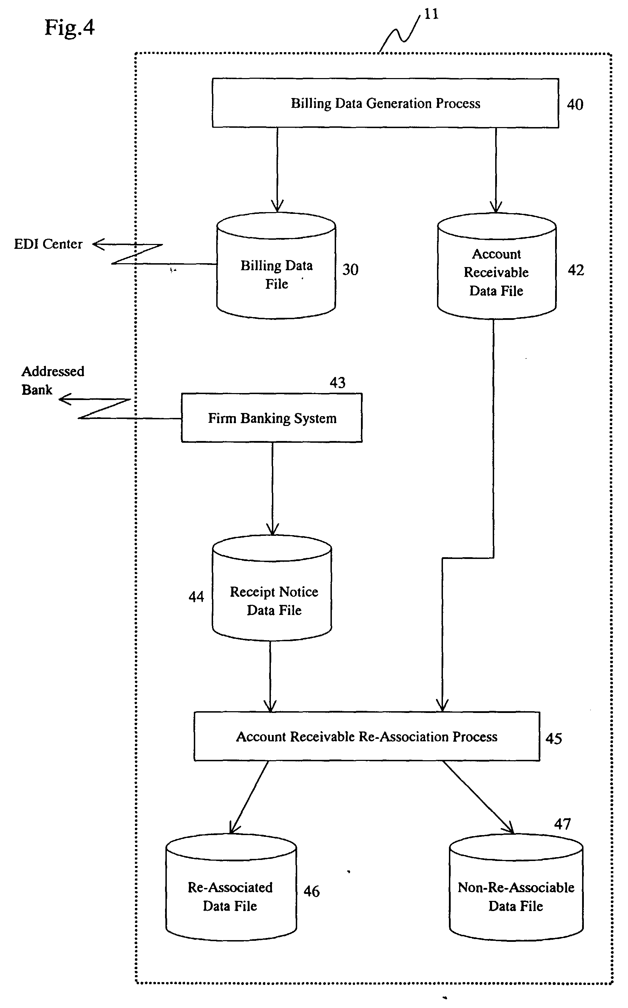

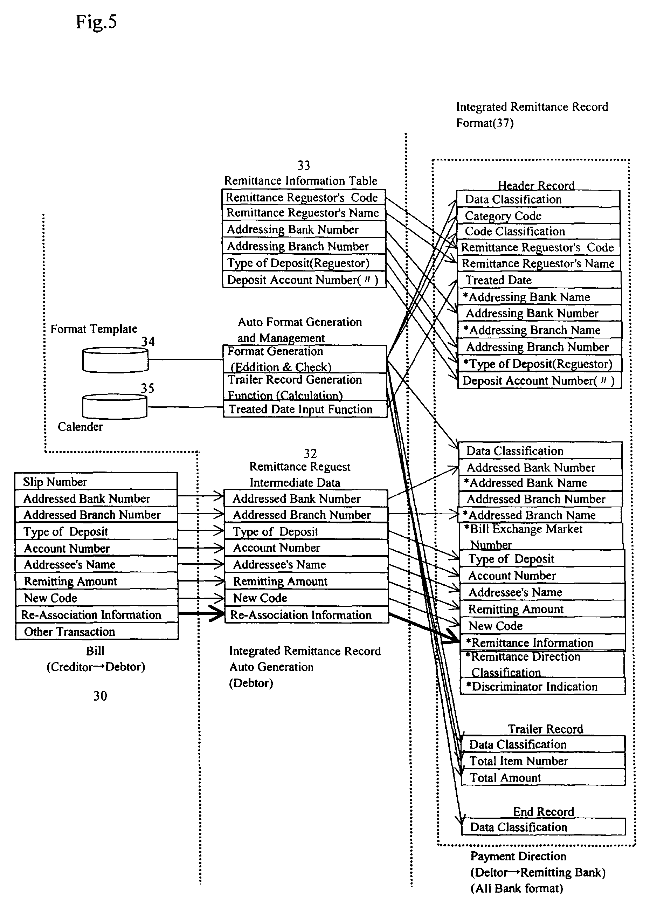

Figure 3 is to explain relationship between processes and data flows in the EDI center for the electronic transaction system of this invention. Figure 4 depicts the relationship between processes and data flows in processor 11 at the creditor side in the electronic transaction system of this invention. Also, Figure 5 shows a data conversion example at EDI center 10 of the electronic transaction system of this invention.

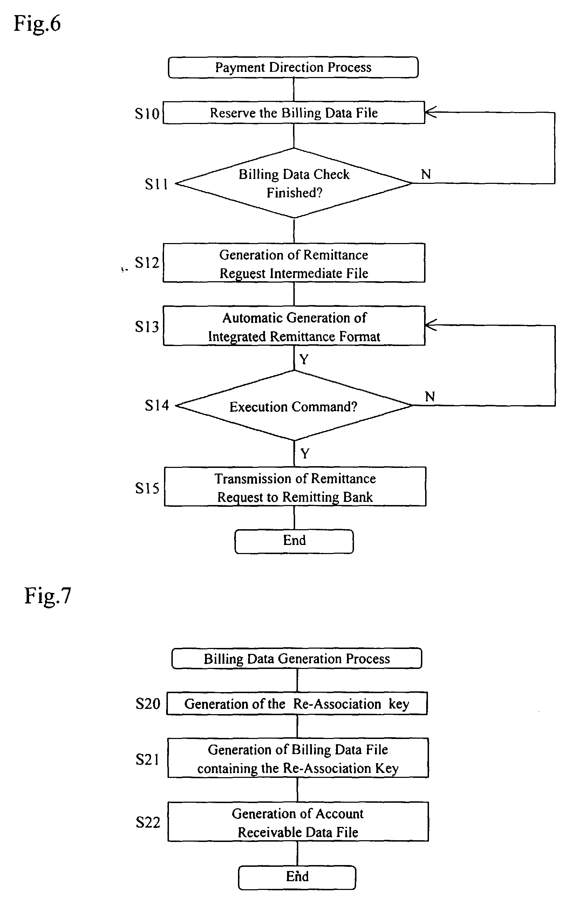

Billing data generation process 40 in Fig. 4 is explained first. The content of billing data generation process 40 at processor 11 at the creditor side is shown in Fig. 7. This process is activated each time at the request of bill issuance. A re-association key peculiar to the bill to be issued is generated at S20 in Fig. 7. The re-association key consists of a twelve-figure character code string, for example. Any arbitral characters, numeric and symbols which do not disturb the data transmission can be used to compose the character code string. It may be possible to include creditor specific character codes or a cyclic serial number as a part of the character code string, in order to ensure that the character code string is peculiar to that bill.

Billing data 30 containing the re-association key is generated at S21. As shown in Fig.5, the re-association key that is generated at S20 is contained in billing data 30, together with such information as the serial number of the bill, the addressing bank information, its account information and the remittance amount. Generated billing data 30 is transmitted to EDI center 10. Account receivable data file 42 that has the same contents of the billing data file in Fig. 4 is generated and saved at the stage of S22.

Next, the process in EDI center 10 is explained. Figure 6 is a flow chart to show the process flow in EDI center 10. At S10 in Fig. 6, billing data file 30 received from creditor side processor 11 is stored in history information database (DB) 31 as it is. Various kinds of data which EDI center 10 has received are reserved in history information DB 31 by using such format as shown in Fig. 19, and any of such past data can be read out when it becomes necessary.

At S11, a message is sent to debtor side processor 12, through an E-mail for example, which prompts checking the received billing data information by the debtor. Notified debtor 12 then access to EDI center 10 and check contents of billing data file 30. The debtor returns acknowledgement if the data are confirmed as correct. Debtor 12 can change the billing amount at this stage, if it is necessary.

At S12, billing data file 30 is converted to remittance request intermediate file 32. At this conversion, necessary information including the re-association key is derived from billing data file 30, as shown in Fig. 5.

At S13, integrated remittance file 37 shown in Fig.5 is generated by reading out necessary information from remittance information table 33 where various kinds of information concerning the person who requested the remittance are recorded in advance, from format template 34 where remittance data format in the Inter-Bank Exchange Network protocol are recorded in advance, from calendar information file 35 where business day information is stored, and from said remittance request intermediate file 32.

Since the format of integrated remittance file 37 conforms to the standard format of well-known Inter-Bank Exchange Network, the data record of the integrated remittance file includes a data item for EDI information. In this invention, the re-association key that is attached to the billing data is automatically written as one of the contents of the data item for EDI information. Items with an asterisk (*) in Fig.5 are optional ones and may or may not be written in the integrated remittance data record.

S14 is the stage to wait until debtor 12 checks the contents of remittance request data and returns a command of payment execution. At S15, the generated remittance request data in integrated remittance file 37 is then transmitted to remitting bank 13 as the bank of debtor 12, by using the well known firm banking system 38. Remittance request data in integrated remittance file 37 is also reserved in history DB 31.

Remitting bank 13 executes the payment (remittance), by using conventional Inter-Bank Exchange Network for example, based on the received remittance request data. The re-association key is also attached to the payment data. Next in Fig. 4, receiving said payment, addressed bank 14 that is the bank of component maker 11 then transmits receipt notice data 44 to creditor side processor 11, by using conventional firm banking system 43. The re-association key is contained also in receipt notice data 44.

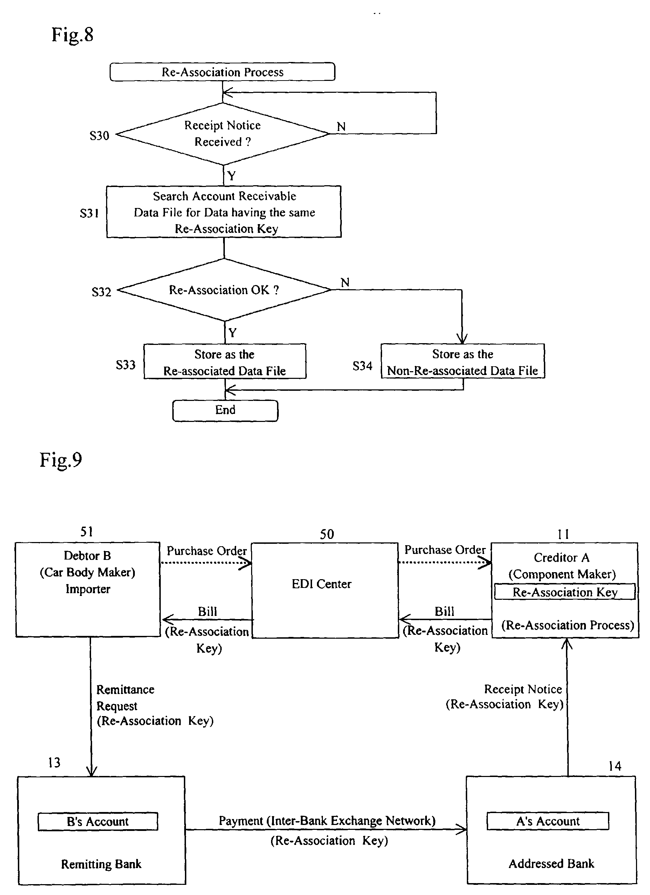

Figure 8 shows the flow chart to explain the process flow for re-association process 45 in processor 11 at the creditor side. S30 is the stage to wait until the processor receives the receipt notice from addressed bank 14. The re-association key contained in receipt notice data 44 is extracted at S31, and account receivable data file 42 is searched to obtain data having the same re-association key.

At S32, read out account receivable data file 42 and receipt notice data file 44 are collated to check whether the information of debtor, price and so on is correct or not. If the result is correct, then the process goes on to S33. If the result is incorrect (NG), then it steps to S34. At S33, account receivable data file 42 is stored as re-associated data file 46. At S34, account receivable data file 42 is stored as non-re-associable data file 47. It will be clearly understood that the re-association process can be automated by using the above described configuration and procedures.

The second embodiment of the invention is described next. Whereas in the first embodiment of the invention, the billing data is converted to remittance request data at EDI center 10, this conversion function is realized at the terminal side in the second embodiment of the invention. Fig 9 is the block diagram to show the second embodiment of the electronic transaction method of this invention. Points which are different from the first embodiment are functions in EDI center 50 and in debtor side processor 51.

In the second embodiment of the invention, EDI center 50 has only history information DB 31 that stores any data files received from any terminal equipment. Received data files, billing data files for example, are transmitted as they are to the destined processor.

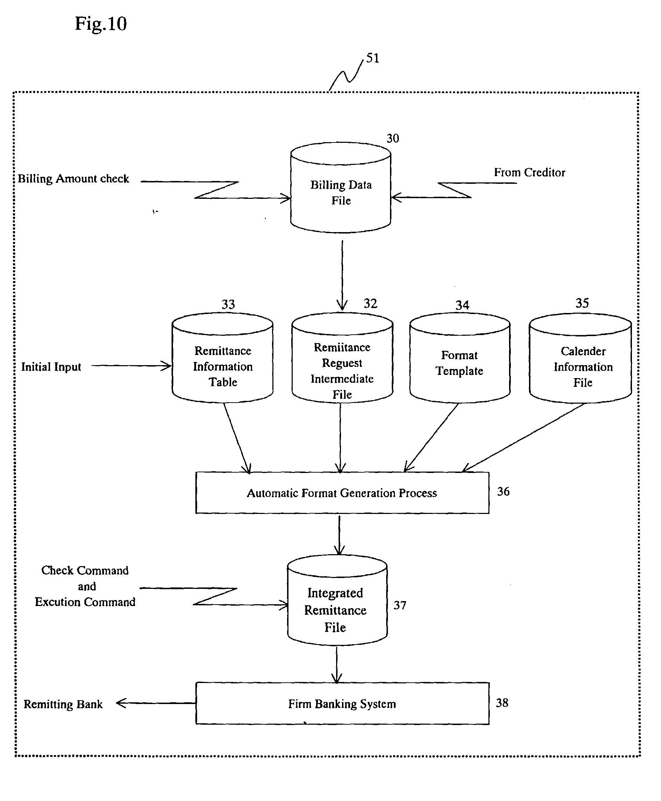

Figure 10 depicts the relationship between processes and data flows in processor 51 at the debtor side in the electronic transaction system of this invention. The difference in functions of the processor from those of EDI center 10 in the first embodiment is that it has no history information DB 31, and that the collation between the billing data and the integrated remittance data and the remittance execution by the command are carried out at the processor, not via the data communications network. Other processes such as generation of integrated remittance file 37 are the same as the first embodiment of the invention.

By applying the above-explained configuration, the processing load can be shared by other processors outside the EDI center, so that the load of the EDI center can be lightened as compared to the one in the first embodiment. Additionally, the response time of debtor side processor 51 can be accelerated.

The third embodiment of this invention is explained next. In the first or second embodiment of the invention, one billing data must be transformed to one remittance request data one by one. But this configuration cannot handle such a case where plural numbers of bills should be paid by one remittance, at the end of each month, for example. The third embodiment of the invention enables to remit money once at the end of each month for a plural numbers of bills throughout the month, and also to re-associate each of the bills at the same time.

Figure 11 is the block diagram to show the third embodiment of the electronic transaction method of this invention. There are two different points from the first embodiment of the invention. The first point is that received plural number of bill data are combined together to make up one payment notice at debtor side processor 61 and then this payment notice is transmitted to EDI center 60. The second point is that EDI center 60 has functions to generate a matching key which is peculiar to that payment notice, to send the matching key with the remittance request to the remitting bank, to store the relationship between re-association keys of the plural number of bills and the matching key as a table, and to send the creditor the receipt notice with the plural number of re-association keys corresponding to that receipt of money, in accordance with the matching key that is attached to the receipt notice received from the addressed bank.

A matching key is attached to the remittance request data that is sent to the remitting bank from EDI center 60, instead of the re-association key in the first embodiment of the invention. The matching key is attached also to the receipt notice that is sent to EDI center 60 from the addressed bank. EDI center 60 sends the creditor the receipt notice, attaching the plural number of re-association keys corresponding to the matching key that is attached to the receipt notice from the addressed bank. Since the creditor receives the plural number of re-association keys with the receipt notice, re-association per each bill can be performed.

Figure 12 shows the relationship between processes and data flows in processor 61 at the debtor side in the third embodiment of this invention. Billing data file 70 received from EDI center 60 is stored temporally in debtor side processor 61, and contents of the billing data are checked at stage 71 by the debtor. Payment notice file 73 is generated from a plural number of already checked billing data files at stage 72 which is the payment notice generation process triggered at the end of each month.

Figure 14 is the flow chart to show the detailed contents of process 72 for generating a payment notice in processor 61 at the debtor side. At S40, billing data are summed up to calculate the payment amount according to the direction, and the payment notice record is generated as the calculation result. Payment amount correction or change is possible at this stage, if necessary. At S41, details of each billing data are attached to the payment notice record to make up a payment notice file. The payment notice file is then transmitted to EDI center 60 at S42.

Figure 13 is to explain relationship between processes and data flows in EDI center 60 in the third embodiment of this invention. Billing data file 30 received from processor at the creditor side 11 is stored in history information DB 31, and is transmitted to processor at the debtor side 61. At matching key attaching process 81, a matching key is attached to the payment notice file 80 that is received from debtor side processor 61, in order to generate remittance request intermediate file 32.

Figure 15 is to show flow charts for matching key attaching process 81 and re-association key attaching process 83 at EDI center 60. A matching key inherent to the payment notice file is generated at S50 in matching key attaching process 81. This matching key is written in payment notice file 80 at S51. At S52, payment notice file 80 where the matching key is attached is stored in history information DB 31.

Figure 18 shows an example for the content of the payment notice in the third embodiment of this invention. Pay-1 file, which is the payment notice data file, contains such items as the total amount of payment (<total price>), the matching key (<matching key>) and purchase order file names (<ordern>). In each purchase order file (p0-1 to p0-5 in this example) the name of which is written in the payment notice file, such data as the billing amount (<price>) and billing information data (Bill) including re-association information (<re-association key>) are stored as version 10.

Now returning to S53 in Fig. 15, the matching key corresponding to the file name of payment notice file 80, or the matching key corresponding to names of plural billing files which are associated to payment notice file 80, is registered and stored in matching key table 82. At S54, a remittance request intermediate file 32 is generated, where this file includes the matching key instead of the re-association key in the first embodiment of the invention.

In Fig. 13, steps between the generation of remittance request intermediate file 32 and the request of remittance through firm banking system 38 are the same as those in the first embodiment of the invention. But the command for checking the integrated remittance file and the command for execution of remittance are not necessary in this embodiment, as compared to the first embodiment. Re-association key attaching process 83 is carried out when the EDI center receives the receipt notice from the addressed bank, resulting in the transmission of the receipt notice with re-association keys to creditor side processor 11.

Figure 15(b) is a flowchart to show the flow of the re-association key attaching process. At S60, the matching key table is searched using the matching key attached to the receipt notice as the searching key, to obtain the file name of corresponding payment notice file 80, and to obtain names of plural billing files corresponding to payment notice file 80. The corresponding re-association key information can be obtained through these steps. At S61, detailed billing data for each bill including re-association key information is attached to the receipt notice. At S62, the receipt notice with the detailed billing information is sent to the creditor. The re-association process for each bill (account receivable) is carried out at processor at the creditor side 11, according to the received receipt notice containing the detailed billing information.

By using the configuration stated above, re-association of each bill at the creditor side becomes possible, even if the debtor remits money for a plural number of bills at one time.

Several variations of the third embodiment are also possible as shown in the following. First, payment notice generation process can be carried out at EDI center 60, just like the first embodiment of the invention. Secondly, it is possible to generate a matching key and to make a remittance request at the debtor side processor, as the same as in the second embodiment of the invention. In this latter case, the payment notice data including the matching key is sent from the debtor side to and stored at EDI center 60, each re-association key information (detailed billing information) is attached at the EDI center, and then transmitted to the creditor side.

Instead of the method shown as the third embodiment of the invention where the EDI center receives the payment notice, converts the matching key to re-association keys and then transmits those re-association keys, it is obviously possible to configure as the processor at the creditor side receives the payment notice just the same as in the first embodiment of the invention, reads out the information (in the payment notice) of correspondence between the matching key and re-association keys from the EDI center, and then executes re-association for each bill.

Other than embodiment examples explained hereinbefore, several variations of the embodiment can be possible as shown in the following. Although the EDI information column of the data format for Inter-Bank Exchange Network in Japan is used for transferring re-association keys in the explanation of each embodiment shown above, any data format and any transmission protocol other than those described in each embodiment can be utilized, as far as a column in which any arbitrary data can be written exists in the remittance request data format, and as far as such written data can be relayed to the receipt notice.

Although an already existing firm banking system or Inter-Bank Exchange Network in Japan is used in each embodiment of the invention explained above in order to relay re-association keys, it becomes impossible to realize this invention if the network to be used cannot assure a route for such re-association key relaying any time. Even in such a case, the automatic re-association process can be realized in such a way as described in the following, for example; here, integrated remittance data 37 that is generated at EDI center10 or at processor at the debtor side 51 is sent to processor at the creditor side 11, and then in processor at the creditor side 11, the integrated remittance data is collated with the receipt notice and with account receivable file 42 in order to complete the re-association process.

In contrast to the above example, even a simpler automatic re-association process can be realized by using the third embodiment of the invention, if it is possible to add and relay an arbitral length data to the data format that is used in the transaction network between companies and banks. In this case, a plural number of re-association keys can be directly attached to the remittance request, instead of attaching the matching key, in the third embodiment of the invention.

Although all of necessary data such as billing data must pass and must be stored in EDI center 10 (50) in each embodiment of the invention described above, a different configuration can be possible. For example, in the second embodiment of the invention, it is possible to configure as creditor 20 sends billing information directly to processor at the debtor side 51, in addition to sending it to EDI center 50, and the EDI center only stores the data without transmitting the billing information. By using this configuration, the load of the EDI center can be lessened further.

This invention is explained using a transaction example between an automobile body maker and a component vendor, but the invention can be applied to any transactions using banks between any types of corporations or even transactions between individuals.

As explained heretofore, the transaction method of this invention is characterized as; it contains (1) a procedure to issue a billing data containing re-association key information that is peculiar to said billing data, to generate an account receivable data which contains said re-association key information and to store said account receivable data, (2) a procedure to generate a remittance request data which contains said re-association key information corresponding to said billing data and to transmit said remittance request data that contains said re-association key information corresponding to said billing data to the addressing bank in which the debtor has an account, and (3) a procedure to re-associate the transaction by collating said re-association key information contained in the receipt notice for the remittance from the addressed bank made by said remittance request data with said re-association key information contained in said account receivable data.

Also the invention is characterized as; it contains (1) a receiving means to receive a billing data which contains re-association key information and which is issued by the creditor, (2) a generating means to generate a remittance request data which contains said re-association key information, (3) a checking means for the debtor to check said billing data and said remittance request data, and (4) a transmitting means to transmit said remittance request data that contains said re-association key information to the addressing bank in which the debtor has an account.

Accordingly, automatic re-association process that can increase efficiency and accuracy of the transaction can be realized by applying this invention, because the re-association key attached to the bill that is created by the creditor can be automatically relayed up to the receipt notice, enabling the automatic re-association process.

Additionally, processing time and related work can be reduced much because the remittance request data is automatically generated from the billing data, as compared to conventional remittance procedures. Furthermore, since various kinds of transaction document data are stored in the system, any of such data can be retrieved later, which enables easier finding of correction methods when an error occurs.

The purpose of the invention is to realize an electronic transaction method and electronic transaction system which enable automatic re-association by transferring the re-association key. The electronic transaction center or the electronic transaction terminal of this invention contains a means to receive a billing data which contains re-association key information issued by the creditor, a means to generate a remittance request data containing said re-association key information, a checking means for the debtor to check the billing data and the remittance request data, and a means to transmit the remittance request data containing the re-association key information to the addressing bank where the debtor has the account. By this invention, the re-association key information that is attached to the billing information issued by the creditor is automatically transmitted to the receipt notice, so that the re-association procedure can be automatically carried out.

## Claims

1. A transaction method comprising; (1) a procedure to issue a billing data containing re-association key information that is peculiar to said billing data, to generate an account receivable data which contains said re-association key information and to store said account receivable data, (2) a procedure to generate a remittance request data which contains said re-association key information corresponding to said billing data and to transmit said remittance request data that contains said re-association key information corresponding to said billing data to the addressing bank in which the debtor has an account, and (3) a procedure to re-associate the transaction by collating said re-association key information contained in the receipt notice for the remittance from the addressing bank made by said remittance request data with said re-association key information contained in said account receivable data.

2. A transaction method comprising; (1) a procedure to issue a billing data containing re-association key information that is peculiar to said billing data, to generate an account receivable data which contains said re-association key information and to store said account receivable data, (2) a procedure to generate a payment data based on a plural number of said billing data, (3) a procedure to attach peculiar matching key information to said payment data and to store said matching key information in reference with the re-association key information of said plural number of billing data contained in said payment data, (4) a procedure to generate a remittance request data containing said matching key information based on said payment data, and to transmit said remittance request data containing said re-association key information to the remitting bank where the debtor's account exists, (5) a procedure to attach said payment data to said receipt notice data according to the matching key information that is contained in the receipt notice from the remitted bank to which remittance is made by said remittance request, and (6) a procedure to collate said re-association key information contained in the receipt data to which said payment data is attached and re-association key information of said account receivable data to complete the re-association process.

3. An electronic transaction center comprising; (1) a receiving means to receive billing data containing re-association key information which is generated by a creditor, (2) a generating means to generate a remittance request data which contains said re-association key information corresponding to said billing data, (3) a checking means which enables a debtor to check said billing data and said remittance request data, and (4) a transmitting means to transmit said remittance request data that contains said re-association key information to the addressing bank where the debtor has its account.

4. An electronic transaction center as claimed in Claim 3, wherein it comprises further a storing means to store received said billing data.

5. An electronic transaction terminal which comprises (1) a receiving means to receive billing data containing re-association key information which is generated by a creditor, (2) a generating means to generate a remittance request data which contains said re-association key information corresponding to said billing data, and (3) a transmitting means to transmit said remittance request data that contains said re-association key information to the addressing bank where the debtor has its account.

6. An electronic transaction system which comprises (1) a creditor side processor which issues a billing data containing a re-association key, generates and stores an account receivable data containing said re-association key, and collates the re-association key contained in the receipt notice from the bank with the re-association key contained in said account receivable data, (2) an electronic transaction center which generates a remittance request data containing said re-association key information corresponding to said billing data and which transmits said remittance request data containing said re-association key information to the addressing bank where the debtor has its account, and (3) a debtor side processor which checks said billing data and said remittance request data and then transmits the payment direction to said electronic transaction center.

7. An electronic transaction system which is configured as a network connecting a buyer, a seller, a remitting bank and a remitted bank to a center, which generates using the same format an ordering data concerning an order and an order receipt, a logistics data concerning shipment and arrival and an accounting data concerning billing and payment, which transfers those data through said center and stores those data in said center for management, wherein (1) said format contains a column for a re-association key, (2) the re-association key is attached to billing data when the data is generated based on said order and then said billing data is transmitted to said center, and (3) the automatic re-association between received money and the bill is carried out using the receipt notice with said re-association key attached, where said receipt notice is generated as the result of remittance based on said billing data.
